(19) Europäisches Patentamt / European Patent Office / Office européen des brevets

(11) **EP 4 043 524 B1**

(12) **EUROPEAN PATENT SPECIFICATION**

(45) Date of publication and mention of the grant of the patent:
**12.03.2025 Bulletin 2025/11**

(21) Application number: **21878765.3**

(22) Date of filing: **07.10.2021**

(51) International Patent Classification (IPC):
**C08L 55/02** (2006.01)          **C08L 25/12** (2006.01)
**C08L 23/08** (2025.01)          **C08K 3/013** (2018.01)
**C08J 11/04** (2006.01)          **C08L 69/00** (2006.01)

(52) Cooperative Patent Classification (CPC):
(C-Sets available)
**C08L 25/12; C08K 3/04; C08K 3/22; C08L 55/02; C08L 69/00;** C08K 2003/2241; C08K 2201/011; C08L 2205/025; C08L 2205/03; C08L 2205/035; C08L 2207/20          (Cont.)

(86) International application number:
**PCT/KR2021/013764**

(87) International publication number:
**WO 2022/085998 (28.04.2022 Gazette 2022/17)**

(54) **THERMOPLASTIC RESIN COMPOSITION, PREPARATION METHOD THEREFOR, AND MOLDED PRODUCT COMPRISING SAME**

THERMOPLASTISCHE HARZZUSAMMENSETZUNG, HERSTELLUNGSVERFAHREN DAFÜR UND FORMPRODUKT DAMIT

COMPOSITION DE RÉSINE THERMOPLASTIQUE, SON PROCÉDÉ DE PRÉPARATION ET PRODUIT MOULÉ LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2020   KR 20200135221**
**01.10.2021   KR 20210130783**

(43) Date of publication of application:
**17.08.2022 Bulletin 2022/33**

(73) Proprietor: **LG Chem, Ltd.**
**Seoul 07336 (KR)**

(72) Inventors:
• **KIM, Yeongmin**
**Yuseong-gu Daejeon 34122 (KR)**
• **KIM, Seo Hwa**
**Yuseong-gu Daejeon 34122 (KR)**
• **CHOI, Eun Jung**
**Yuseong-gu Daejeon 34122 (KR)**
• **KANG, Byoung II**
**Yuseong-gu Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
CN-A- 1 401 705          CN-A- 104 231 535
DE-A1- 4 300 798          JP-A- 2015 160 900
JP-B2- 4 285 984          US-A1- 2017 190 913
US-B2- 7 902 262          US-B2- 9 416 269

**(Cont. next page)**

• **BISWAL MANORANJAN ET AL: "Effect of reactive compatibilizers and impact modifier on the performance characteristics of polycarbonate/poly(acrylonitrile-butadiene-styrene) blends obtained from E-waste", INTERNATIONAL JOURNAL OF PLASTICS TECHNOLOGY, CENTRAL INSTITUTE OF PLASTICS ENGINEERING & TECHNOLOGY, CIPET, IN, vol. 17, no. 2, 9 March 2014 (2014-03-09), pages 209 - 225, XP035343921, ISSN: 0972-656X, [retrieved on 20140309], DOI: 10.1007/S12588-014-9061-4**

(52) Cooperative Patent Classification (CPC): (Cont.)

C-Sets
**C08L 25/12, C08L 55/02, C08L 55/02, C08L 23/0853, C08K 3/04, C08K 2003/2241;**

**C08L 55/02, C08L 25/12, C08L 25/12, C08L 23/0853, C08K 3/04, C08K 2003/2241; C08L 55/02, C08L 25/12, C08L 55/02, C08L 23/0853, C08K 3/04, C08K 2003/2241; C08L 55/02, C08L 25/12, C08L 55/02, C08L 25/12, C08L 23/0853, C08K 3/04, C08K 2003/2241; C08L 69/00, C08L 25/12, C08L 55/02, C08L 55/02, C08L 23/0853, C08K 3/04, C08K 2003/2241**

## Description

[Technical Field]

The present invention relates to a thermoplastic resin composition, a method of preparing the same, and a molded article including the same, and more particularly, to a thermoplastic resin composition having a significantly increased physical property retention rate by preventing deterioration of physical properties due to repeated processing while maintaining existing mechanical properties and chemical resistance even when an excess of a recycled resin is included in an ABS-based thermoplastic resin composition.

[Background Art]

Vinyl cyanide compound-conjugated diene compound-aromatic vinyl compound graft copolymers (hereinafter referred to as "ABS-based resins") represented by acrylonitrile-butadiene-styrene resins have excellent processability, mechanical properties, and appearance, and thus have been used in various fields, such as parts of electrical and electronic products, automobiles, small toys, furniture, and building materials.

Meanwhile, as interest in the environment is growing, regulations are being strengthened to reduce carbon dioxide emissions. In particular, in recent years, environmental pollution due to increased use of plastics has emerged as a serious problem. Accordingly, regulations at a manufacturing stage, such as mandatory use of recycled resins, are being strengthened mainly in the United States. Accordingly, a manufacturer must add more than a certain amount of recycled resin when manufacturing a resin molded product. In addition, an eco-friendly grade is given according to the content of recycled resin.

However, since a recycled resin has already been processed, the recycled resin contains additives such as colorants, lubricants, and release agents. In addition, since a recycled resin has been subjected to high-temperature processing, the properties thereof have already changed. Thus, compared to a virgin resin, the impact strength, tensile strength, chemical resistance, and thermal stability of the recycled resin are inferior, and appearance is deteriorated due to foreign substances.

To solve these problems, a method of adding a certain amount of a virgin resin to a composition including a recycled resin has been attempted. Through this method, deterioration of mechanical properties could be alleviated to some extent, but a satisfactory level of chemical resistance was still not obtained. The problem of deterioration in appearance due to foreign substances present on a surface during injection or extrusion is still unresolved. Moreover, this problem becomes more serious as the number of processing increases.

[Related Art Documents]

[Patent Documents]

(Patent Document 1) KR 2016-0144185 A

JP 4285984 B2 discloses a polyester composition for flooring, comprising: 100 parts by weight of a polyester component which includes a recycled polyethylene terephthalate resin and a polyester elastomer, wherein the polyester elastomer is contained in an amount of 30-90 wt.%; 10 parts by weight of an ethylene-vinylacetate copolymer; and an inorganic filler material. Calcium carbonate and various clays can be used as the inorganic filler material in an amount of 200 parts by weight or less to 100 parts by weight of the polyester component.

JP 2015160900 A discloses an acrylonitrile-styrene copolymer and an acrylonitrile-butadiene-styrene copolymer resin obtained by polymerizing acrylonitrile and styrene into polybutadiene as waste plastics used for a recycled thermoplastic resin composition. DE4300798A1 discloses compositions of (A) 5-95 wt.% aromatic polycarbonate and (B) 95-5 wt. % ABS resin. The mixt. of (A) and (B) is melt-extruded or injection moulded with the addition of 0.1-5 wt.% ethylene-vinyl acetate (EVA) copolymer (w.r.t. 100 wt.% A+B). Recycled materials of PC/ABS are mentioned in the introduction of DE4300798A1.

[Disclosure]

[Technical Problem]

Therefore, the present invention has been made in view of the above problems, and it is one object of the present invention to provide a thermoplastic resin composition capable of alleviating deterioration of physical properties due to repeated molding while maintaining the intrinsic mechanical properties, chemical resistance, and appearance of a conventional ABS-based resin even though the thermoplastic resin composition includes an excess of a recycled resin.

It is another object of the present invention to provide a method of preparing the thermoplastic resin composition and a molded article manufactured using the thermoplastic resin composition.

The above and other objects can be accomplished by the present invention described below.

[Technical Solution]

In accordance with one aspect of the present invention, provided is a thermoplastic resin composition including 100 parts by weight of a base resin including 20 to 90 % by weight of a non-recycled thermoplastic resin (A) and 10 to 80 % by weight of a recycled thermoplastic resin (B), wherein the non-recycled thermoplastic copolymer (A) comprises 20 to 70 % by weight of a non-recycled vinyl cyanide compound-conjugated diene compound-aromatic vinyl compound graft copolymer (A-1) and 30 to 80 % by weight of a non-recycled aromatic vinyl compound-vinyl cyanide compound copolymer (A-2), and wherein the recycled thermoplastic resin (B) comprises one or more selected from the group consisting of a recycled vinyl cyanide compound-conjugated diene compound-aromatic vinyl compound copolymer, a recycled polycarbonate resin, and a recycled aromatic vinyl compound-vinyl cyanide compound copolymer; 1 to 10 parts by weight of an ethylene compound-vinyl acetate compound copolymer (C); and 0.01 to 10 parts by weight of an inorganic pigment (D), wherein the inorganic pigment (D) has a refractive index of 1.65 or more and an average particle diameter of 10 to 500 nm.

In addition, the present invention provides a thermoplastic resin composition including 100 parts by weight of a base resin including 20 to 90 % by weight of a non-recycled thermoplastic resin (A) and 10 to 80 % by weight of a recycled thermoplastic resin (B), wherein the non-recycled thermoplastic copolymer (A) comprises 20 to 70 % by weight of a non-recycled vinyl cyanide compound-conjugated diene compound-aromatic vinyl compound graft copolymer (A-1) and 30 to 80 % by weight of a non-recycled aromatic vinyl compound-vinyl cyanide compound copolymer (A-2), and wherein the recycled thermoplastic resin (B) comprises one or more selected from the group consisting of a recycled vinyl cyanide compound-conjugated diene compound-aromatic vinyl compound copolymer, a recycled polycarbonate resin, and a recycled aromatic vinyl compound-vinyl cyanide compound copolymer; 1 to 10 parts by weight of an ethylene compound-vinyl acetate compound copolymer (C); and 0.01 to 10 parts by weight of an inorganic pigment (D), wherein the thermoplastic resin composition has a melt index retention rate of 80 % or more as calculated by Equation 1 below:

[Equation 1]

$$\text{Melt index retention rate (\%)} = [MI_{n+5}/MI_n] \times 100,$$

wherein $MI_n$ is a melt index value (g/10 min) as measured at 220 °C under a load of 10 kg according to ASTM D1238 after extruding the thermoplastic resin composition n times under a condition of 200 to 250 °C and 250 to 400 rpm, and $MI_{n+5}$ is a melt index value (g/10 min) as measured after repeatedly performing extrusion n+5 times under the same conditions, wherein n is an integer from 1 to 10.

In addition, the present invention provides a thermoplastic resin composition including 100 parts by weight of a base resin including 20 to 90 % by weight of a non-recycled thermoplastic resin (A) and 10 to 80 % by weight of a recycled thermoplastic resin (B), wherein the non-recycled thermoplastic copolymer (A) comprises 20 to 70 % by weight of a non-recycled vinyl cyanide compound-conjugated diene compound-aromatic vinyl compound graft copolymer (A-1) and 30 to 80 % by weight of a non-recycled aromatic vinyl compound-vinyl cyanide compound copolymer (A-2), and wherein the recycled thermoplastic resin (B) comprises one or more selected from the group consisting of a recycled vinyl cyanide compound-conjugated diene compound-aromatic vinyl compound copolymer, a recycled polycarbonate resin, and a recycled aromatic vinyl compound-vinyl cyanide compound copolymer; 1 to 10 parts by weight of an ethylene compound-vinyl acetate compound copolymer (C); and 0.01 to 10 parts by weight of an inorganic pigment (D), wherein thermoplastic resin composition has an impact strength retention rate of 80 % or more as calculated by Equation 2 below:

Impact strength retention rate (%) = [ImSt$_{n+5}$/ImSt$_n$] $\times$ 100,                    [Equation 2]

wherein $ImSt_n$ is an Izod impact strength value (kgf·cm/cm) as measured under a condition of specimen thickness of 1/8" according to ASTM D256 after extruding the thermoplastic resin composition n times under a condition of 200 to 250 °C and 250 to 400 rpm, and $ImSt_{n+5}$ is an Izod impact strength value (kgf·cm/cm) as measured after repeatedly performing extrusion n+5 times under the same conditions, wherein n is an integer from 1 to 10.

In accordance with another aspect of the present invention, provided is a method of preparing a thermoplastic resin composition of the invention, the method including a step of kneading and extruding 100 parts by weight of a base resin including 20 to 90 % by weight of a non-recycled thermoplastic resin (A) and 10 to 80 % by weight of a recycled thermoplastic resin (B), 1 to 10 parts by weight of an ethylene compound-vinyl acetate compound copolymer (C), and 0.01 to 10 parts by weight of an inorganic pigment (D) at 200 to 280 °C.

The inorganic pigment (D) preferably has a refractive index of 1.65 or more and an average particle diameter of 10 to 500 nm.

In accordance with yet another aspect of the present invention, provided is a molded article including the thermoplastic resin composition.

Further embodiments are disclosed in the dependent claims.

[Advantageous effects]

The present invention has an effect of providing a thermoplastic resin composition having excellent mechanical properties, chemical resistance, and appearance and especially capable of preventing deterioration of physical properties due to repeated molding process even though the thermoplastic resin composition includes an excess of a recycled resin; a method of preparing the thermoplastic resin composition; and a molded article manufactured using the thermoplastic resin composition.

[Description of Drawings]

FIG. 1 shows the chemical resistance test results of Examples according to the present invention and Comparative Examples.

FIG. 2 includes images showing points where surface foreign substances are generated in an example of the present invention and a comparative example.

FIG. 3 includes light microscope images of the surface foreign substances of an example of the present invention and a comparative example.

[Best mode]

Hereinafter, the thermoplastic resin composition of the present invention will be described in detail.

The present inventors confirmed that, when a specific compound was added in a predetermined amount when mixing a recycled resin with an ABS-based resin composition, mechanical properties and chemical resistance were improved, and deterioration in mechanical properties and appearance due to repeated processing was prevented. Based on these results, the present inventors conducted further studies to complete the present invention.

The thermoplastic resin composition of the present invention includes 100 parts by weight of a base resin including 20 to 90 % by weight of a non-recycled thermoplastic resin (A) and 10 to 80 % by weight of a recycled thermoplastic resin (B), wherein the non-recycled thermoplastic copolymer (A) comprises 20 to 70 % by weight of a non-recycled vinyl cyanide compound-conjugated diene compound-aromatic vinyl compound graft copolymer (A-1) and 30 to 80 % by weight of a non-recycled aromatic vinyl compound-vinyl cyanide compound copolymer (A-2), and wherein the recycled thermoplastic resin (B) comprises one or more selected from the group consisting of a recycled vinyl cyanide compound-conjugated diene compound-aromatic vinyl compound copolymer, a recycled polycarbonate resin, and a recycled aromatic vinyl compound-vinyl cyanide compound copolymer; 1 to 10 parts by weight of an ethylene compound-vinyl acetate compound copolymer (C); and 0.01 to 10 parts by weight of an inorganic pigment (D), wherein the inorganic pigment (D) has a refractive index of 1.65 or more and an average particle diameter of 10 to 500 nm.

In this case, even though the thermoplastic resin composition includes an excess of a recycled resin, the thermoplastic resin composition has excellent mechanical strength, such as impact strength and tensile strength, moldability, and chemical resistance, and has improved physical property retention rate for repeated molding process.

In addition, the thermoplastic resin composition of the present invention includes 100 parts by weight of a base resin including 20 to 90 % by weight of a non-recycled thermoplastic resin (A) and 10 to 80 % by weight of a recycled thermoplastic resin (B), wherein the non-recycled thermoplastic copolymer (A) comprises 20 to 70 % by weight of a non-recycled vinyl cyanide compound-conjugated diene compound-aromatic vinyl compound graft copolymer (A-1) and 30 to 80 % by weight of a non-recycled aromatic vinyl compound-vinyl cyanide compound copolymer (A-2), and wherein the recycled thermoplastic resin (B) comprises one or more selected from the group consisting of a recycled vinyl cyanide compound-conjugated diene compound-aromatic vinyl compound copolymer, a recycled polycarbonate resin, and a recycled aromatic vinyl compound-vinyl cyanide compound copolymer; 1 to 10 parts by weight of an ethylene compound-vinyl acetate compound copolymer (C); and 0.01 to 10 parts by weight of an inorganic pigment (D), wherein the thermoplastic resin composition has a melt index retention rate of 80 % or more as calculated by Equation 1 below. In this case, even though the thermoplastic resin composition includes an excess of a recycled resin, the thermoplastic resin composition has excellent mechanical strength, such as impact strength and tensile strength, moldability, and chemical resistance, and has improved physical property retention rate for repeated molding process.

[Equation 1]

$$\text{Melt index retention rate (\%)} = [MI_{n+5}/MI_n] \times 100$$

(In Equation 1, $MI_n$ is a melt index value as measured at 220 °C under a load of 10 kg according to ASTM D1238 after extruding the thermoplastic resin composition n times under a condition of an extrusion temperature of 200 to 250 °C and a screw rotation speed of 250 to 400 rpm, and $MI_{n+5}$ is a melt index value as measured after repeatedly performing extrusion n+5 times under the same conditions. In this case, n is an integer from 1 to 10.)

In addition, the thermoplastic resin composition of the present invention includes 100 parts by weight of a base resin including 20 to 90 % by weight of a non-recycled thermoplastic resin (A) and 10 to 80 % by weight of a recycled thermoplastic resin (B), wherein the non-recycled thermoplastic copolymer (A) comprises 20 to 70 % by weight of a non-recycled vinyl cyanide compound-conjugated diene compound-aromatic vinyl compound graft copolymer (A-1) and 30 to 80 % by weight of a non-recycled aromatic vinyl compound-vinyl cyanide compound copolymer (A-2), and wherein the recycled thermoplastic resin (B) comprises one or more selected from the group consisting of a recycled vinyl cyanide compound-conjugated diene compound-aromatic vinyl compound copolymer, a recycled polycarbonate resin, and a recycled aromatic vinyl compound-vinyl cyanide compound copolymer; 1 to 10 parts by weight of an ethylene compound-vinyl acetate compound copolymer (C); and 0.01 to 10 parts by weight of an inorganic pigment (D), wherein the thermoplastic resin composition has an impact strength retention rate of 80 % or more as calculated by Equation 2 below. In this case, even though the thermoplastic resin composition includes an excess of a recycled resin, the thermoplastic resin composition has excellent mechanical strength, such as impact strength and tensile strength, moldability, and chemical resistance, and has improved physical property retention rate for repeated molding process.

Impact strength retention rate (%) = $[ImSt_{n+5}/ImSt_n] \times 100$ [Equation 2]

(In Equation 2, $ImSt_n$ is an Izod impact strength value as measured under a condition of specimen thickness of 1/8" according to ASTM D256 after extruding the thermoplastic resin composition n times under a condition of an extrusion temperature of 200 to 250 °C and a screw rotation speed of 250 to 400 rpm, and $ImSt_{n+5}$ is an Izod impact strength value as measured after repeatedly performing extrusion n+5 times under the same conditions. In this case, n is an integer from 1 to 10.)

The n value of Equation 1 and the n value of Equation 2 may be independent, and may be the same or different.

In this description, the composition ratio of a (co)polymer may mean the content of units constituting the (co)polymer, or may mean the content of units input during polymerization of the (co)polymer.

In this description, as the recycled thermoplastic resin of the present invention, a recycled thermoplastic resin that follows the definition of the present invention and is generally recognized as a recycled thermoplastic resin in the art to which the present invention pertains may be used without particular limitation. For example, the recycled thermoplastic resin of the present invention may be a thermoplastic resin recycled from collected waste plastics. As a specific example, the recycled thermoplastic resin refers to a material prepared as a usable raw material by sorting, washing, and grinding waste plastics. In addition, when necessary, the recycled thermoplastic resin may be prepared in the form of pellets through extrusion. In this case, there is an advantage in that there is no need for additional processing such as purification. Since the recycled thermoplastic resin has been processed one or more times, the recycled thermoplastic resin may include additives such as colorants, lubricants, and/or release agents.

In this description, the non-recycled thermoplastic resin is a resin as opposed to the recycled thermoplastic resin as defined above. The non-recycled thermoplastic resin may be prepared directly by polymerizing monomers constituting a thermoplastic resin, or may be a commercially available product corresponding thereto.

Hereinafter, each component constituting the thermoplastic resin composition of the present invention will be described in detail.

## (A) Non-recycled thermoplastic resin

Based on a total weight of the base resin, the non-recycled thermoplastic resin (A) is included in an amount of 20 to 90 % by weight. In this case, mechanical properties, moldability, chemical resistance, and appearance may be excellent. As a preferred example, based on a total weight of the base resin, the non-recycled thermoplastic resin (A) is included in an amount of 20 to 80 % by weight, more preferably 25 to 75 % by weight, still more preferably 25 to 70 % by weight. Within this range, mechanical properties, moldability, appearance, and physical property balance may be excellent.

The non-recycled thermoplastic resin (A) includes 20 to 70 % by weight of a non-recycled vinyl cyanide compound-conjugated diene compound-aromatic vinyl compound graft copolymer (A-1) (hereinafter referred to as "graft copolymer (A-1)") and 30 to 80 % by weight of a non-recycled aromatic vinyl compound-vinyl cyanide compound copolymer (A-2) (hereinafter referred to as "copolymer (A-2)"). Within this range, mechanical properties, moldability, chemical resistance, and appearance may be excellent.

Based on a total weight of the non-recycled thermoplastic resin (A), the non-recycled thermoplastic resin (A) preferably includes 20 to 60 % by weight of the graft copolymer (A-1) and 40 to 80 % by weight of the copolymer (A-2), more preferably 20 to 50 % by weight of the graft copolymer (A-1) and 50 to 80 % by weight of the copolymer (A-2).

For example, the graft copolymer (A-1) may include 50 to 80 % by weight of conjugated diene rubber including a conjugated diene compound, 5 to 20 % by weight of a vinyl cyanide compound, and 10 to 40 % by weight of an aromatic vinyl compound. Within this range, mechanical properties, moldability, appearance, and physical property balance may be excellent.

As a preferred example, the graft copolymer (A-1) includes 50 to 70 % by weight of conjugated diene rubber, 5 to 15 % by weight of a vinyl cyanide compound, and 20 to 40 % by weight of an aromatic vinyl compound, more preferably 55 to 65 % by weight of conjugated diene rubber, 10 to 15 % by weight of a vinyl cyanide compound, and 20 to 30 % by weight of an aromatic vinyl compound. Within this range, impact resistance and physical property balance may be excellent.

For example, the conjugated diene rubber included in the graft copolymer (A-1) may have an average particle diameter of 2,000 to 5,000 Å, preferably 2,000 to 4,000 Å, more preferably 2,500 to 3,500 Å. Within this range, impact strength may be excellent without deterioration in other physical properties.

In this description, unless otherwise specified, the average particle diameter of the conjugated diene rubber may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 $\mu$sec.

For example, the graft copolymer (A-1) may have a grafting degree of 20 to 70 %, preferably 20 to 55 %, more preferably 20 to 45 %. Within this range, appropriate compatibility and moldability may be secured, and balance between compatibility, moldability, and other mechanical properties may be excellent.

In this description, when measuring grafting degree, 30 g of acetone is added to 0.5 g of a powdered graft (co)polymer, agitation is performed at 210 rpm and room temperature for 12 hours using a shaker (SKC-6075, Lab Companion Co.), centrifugation is performed at 18,000 rpm and 0 °C for 3 hours using a centrifuge (Supra R30, Hanil Science Co.) to separate only insoluble matter that is not dissolved in acetone, and the separated insoluble matter is dried via forced circulation at 85 °C for 12 hours using a forced convection oven (OF-12GW, Lab Companion Co.). Then, the weight of the dried insoluble matter is measured, and grafting degree is calculated by Equation 1 below.

Grafting degree (%) = [Weight of grafted monomers (g)/ Rubber weight (g)] $\times$ 100       [Equation 1]

In Equation 1, the weight of grafted monomers is a value obtained by subtracting the weight (g) of rubber from the weight of insoluble matter (gel) obtained by dissolving a graft copolymer in acetone and performing centrifugation, and the weight (g) of rubber is the weight of rubber components theoretically included in the graft copolymer powder.

The drying may proceed until there is no further change in weight.

For example, the vinyl cyanide compound-aromatic vinyl compound copolymer included in the graft copolymer (A-1) may have a weight average molecular weight of 50,000 to 200,000 g/mol or 65,000 to 180,000 g/mol. Within this range, due to appropriate fluidity, processability and impact resistance may be excellent, but the present invention is not limited thereto. In this case, the vinyl cyanide compound-aromatic vinyl compound copolymer included in the graft copolymer (A-1) means a vinyl cyanide compound-aromatic vinyl compound copolymer grafted onto the conjugated diene rubber of the graft copolymer (A-1).

In this description, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 $\mu$l, column model: 1$\times$ PLgel 10 $\mu$m MiniMix-B (250 $\times$ 4.6 mm) + 1$\times$ PLgel 10 $\mu$m MiniMix-B (250 $\times$ 4.6 mm) + 1$\times$ PLgel 10 $\mu$m MiniMix-B Guard (50 $\times$ 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the graft copolymer (A-1) may be prepared by a known polymerization method including emulsion polymerization, suspension polymerization, and bulk polymerization, preferably emulsion polymerization.

For example, based on 100 parts by weight in total of the conjugated diene rubber, the aromatic vinyl compound, and the vinyl cyanide compound included in the graft copolymer, the graft copolymer (A-1) may be prepared by adding, continuously or batchwise, a monomer mixture including 5 to 20 parts by weight of the vinyl cyanide compound and 10 to 40 parts by weight of the aromatic vinyl compound to a mixed solution containing 50 to 80 parts by weight (based on solids) of conjugated diene rubber latex, 0.1 to 5 parts by weight of an emulsifier, 0.1 to 3 parts by weight of a molecular weight modifier, and 0.05 to 1 part by weight of an initiator and then performing polymerization.

As another example, based on 100 parts by weight in total of the conjugated diene rubber, the aromatic vinyl compound, and the vinyl cyanide compound, the graft copolymer (A-1) may be prepared by adding, at 65 to 75 °C for 2 to 4 hours, a mixed solution including 5 to 20 parts by weight of the vinyl cyanide compound, 10 to 40 parts by weight of the aromatic vinyl compound, 10 to 50 parts by weight of deionized water, 0.09 to 1.5 parts by weight of an initiator, 0.1 to 2 parts by weight of an emulsifier, and 0.05 to 1.5 parts by weight of a molecular weight modifier, which has been mixed in a separate mixing device, to 50 to 80 parts by weight (based on solids) of conjugated diene rubber latex and 60 to 150 parts by weight of deionized water; adding 0.01 to 0.5 parts by weight of an initiator thereto; raising temperature to 75 to 80 °C for 30 to 90 minutes; and terminating graft polymerization at a polymerization conversion rate of 93 to 99 % by weight. In this case, impact resistance, mechanical strength, and moldability may be excellent.

In this description, based on 100 % by weight in total of monomers input until polymerization is completed, polymerization conversion rate may be defined as % by weight of the monomers converted into a copolymer until measurement time. A method of measuring polymerization conversion rate is not particularly limited as long as the method follows this definition. As a specific example, after drying 1.5 g of prepared copolymer latex in a hot air dryer at 150 °C for 15 minutes, the weight of the dried latex is measured, and total solids content (TSC) is calculated by Equation 4 below. Then, polymerization conversion rate is calculated by substituting the total solids content value into Equation 5 below. In Equation 5, the total weight of added monomers is given as 100 parts by weight.

[Equation 4]

$$\text{Total solids content (TSC; \%)} = \frac{\text{Weight after drying}}{\text{Weight before drying}} \times 100$$

Polymerization conversion rate (%) = [Total solids content (TSC) $\times$ (Total weight of added monomers, deionized water, and subsidiary raw materials) / 100] - (Weight of added subsidiary raw materials other than monomers and deionized water)   [Equation 5]

In Equation 5, subsidiary raw materials include an initiator, an emulsifier, and a molecular weight modifier, and include an electrolyte when the electrolyte is used.

For example, the conjugated diene compound may include one or more selected from the group consisting of 1,3-butadiene, 2,3-dimethyl-1,3-butadiene, 2-ethyl-1,3-butadiene, 1,3-pentadiene, isoprene, chloroprene, and pyrerylene.

For example, the vinyl cyanide compound may include one or more selected from the group consisting of acrylonitrile, methacrylonitrile, ethylacrylonitrile, and derivatives thereof.

For example, the aromatic vinyl compound may include one or more selected from the group consisting of styrene, $\alpha$-methyl styrene, o-methyl styrene, p-methyl styrene, m-methyl styrene, ethyl styrene, isobutyl styrene, t-butyl styrene, o-bromostyrene, p-bromostyrene, m-bromostyrene, o-chlorostyrene, p-chlorostyrene, m-chlorostyrene, vinyltoluene, vinylxylene, fluorostyrene, and vinylnaphthalene.

As a preferred example, the conjugated diene rubber may include one or more selected from the group consisting of a butadiene polymer, a butadiene-styrene copolymer, a butadiene-acrylonitrile copolymer, and an ethylene-propylene copolymer, without being limited thereto.

In this description, the derivative is a compound produced by substituting a hydrogen atom or an atomic group of an original compound with another atom or atomic group, for example, refers to a compound produced by substitution with a halogen or an alkyl group.

For example, the emulsifier may include one or more selected from the group consisting of allyl aryl sulfonates, alkali methyl alkyl sulfonates, sulfonated alkyl esters, fatty acid soap, and rosin acid alkali salts. In this case, polymerization stability may be excellent.

For example, the molecular weight modifier may include one or more selected from the group consisting of t-dodecyl mercaptan, n-dodecyl mercaptan, n-octyl mercaptan, and carbon tetrachloride, preferably t-dodecyl mercaptan.

For example, the initiator may be a water-soluble persulfuric acid polymerization initiator, a fat-soluble polymerization initiator, or an oxidation-reduction catalyst system. For example, the water-soluble persulfuric acid polymerization initiator may include one or more selected from the group consisting of potassium persulfate, sodium persulfate, and ammonium persulfate, and the fat-soluble polymerization initiator may include one or more selected from the group consisting of cumene hydroperoxide, diisopropyl benzene hydroperoxide, azobis iso butyronitrile, t-butyl hydroperoxide, paramethane hydroperoxide, and benzoylperoxide.

For example, latex prepared by emulsion polymerization may be coagulated using a coagulant such as sulfuric acid, $MgSO_4$, $CaCl_2$, or $Al_2(SO_4)_3$, and then the coagulated latex may be aged, dehydrated, and dried to obtain powdered latex.

For example, when the graft copolymer (A-1) is prepared, an oxidation-reduction catalyst may be further included. For example, the oxidation-reduction catalyst may include one or more selected from the group consisting of sodium formaldehyde sulfoxylate, sodium ethylenediamine tetraacetate, ferrous sulfate, dextrose, sodium pyrrolate, and sodium sulfite, without being limited thereto. Oxidation-reduction catalysts commonly used when ABS-based graft copolymers are prepared may be used in the present invention, without particular limitation.

Other additives such as electrolytes not specifically mentioned in the present description may be appropriately selected when necessary. The additives may be used within a range commonly applied in preparation of vinyl cyanide compound-conjugated diene compound-aromatic vinyl compound graft copolymer, without particular limitation.

In the method of preparing the graft copolymer, other reaction conditions, such as reaction time, reaction temperature, pressure, and time of input of reactants, other than the above-mentioned conditions, may be appropriately selected and used without particular limitation as long as the other reaction conditions are commonly used in the art to which the present invention pertains.

As another example, as the graft copolymer (A-1), a commercially available product may be used as long as the product follows the definition of the present invention.

For example, the copolymer (A-2) may include 20 to 40 % by weight of a vinyl cyanide compound and 60 to 80 % by weight of an aromatic vinyl compound. In this case, mechanical properties, moldability, and chemical resistance may be excellent.

As a preferred example, the copolymer (A-2) includes 20 to 35 % by weight of a vinyl cyanide compound and 65 to 80 % by weight of an aromatic vinyl compound, more preferably 23 to 33 % by weight of a vinyl cyanide compound and 67 to 77 % by weight of an aromatic vinyl compound. Within this range, chemical resistance and physical property balance may be excellent.

For example, the copolymer (A-2) may have a weight average molecular weight of 70,000 to 200,000 g/mol, preferably 80,000 to 180,000 g/mol, more preferably 90,000 to 160,000 g/mol. Within this range, chemical resistance, processability, and physical property balance may be excellent.

For example, the aromatic vinyl compound included in the copolymer (A-2) may include one or more selected from the group consisting of styrene, ethyl styrene, o-bromostyrene, p-bromostyrene, m-bromostyrene, o-chlorostyrene, p-chlorostyrene, m-chlorostyrene, vinyltoluene, vinylxylene, fluorostyrene, and vinylnaphthalene, preferably styrene.

For example, the vinyl cyanide compound may include one or more selected from the group consisting of acrylonitrile, methacrylonitrile, ethylacrylonitrile, and isopropylacrylonitrile, preferably acrylonitrile.

For example, the copolymer (A-2) may further include 0 to 30 % by weight, preferably 1 to 20 % by weight, more preferably 5 to 10 % by weight of one or more selected from the group consisting of an unsaturated carboxylic acid, an anhydride of an unsaturated carboxylic acid, and a maleimide-based monomer. As such, when a comonomer is included when a copolymer is polymerized, heat resistance and processability may be excellent.

For example, the unsaturated carboxylic acid may include one or more selected from the group consisting of maleic acid, acrylic acid, and methacrylic acid, the anhydride of an unsaturated carboxylic acid may be an anhydride of the unsaturated carboxylic acid, and the maleimide-based monomer may be maleimide N-substituted with an alkyl group having 1 to 5 carbon atoms or an aryl group having 6 to 10 carbon atoms, as a specific example, N-phenyl maleimide, maleimide, or a mixture thereof.

The aromatic vinyl compound-vinyl cyanide compound copolymer (A-2) may be prepared by emulsion polymerization, suspension polymerization, bulk polymerization, continuous bulk polymerization, or the like, preferably emulsion polymerization or suspension polymerization, and a commercially available product may be used as the aromatic vinyl compound-vinyl cyanide compound copolymer (A-2) as long as the product follow the definition of the present invention.

## (B) Recycled thermoplastic resin

Based on a total weight of the base resin, the recycled thermoplastic resin (B) is included in an amount of 10 to 80 % by weight. In this case, mechanical properties, moldability, chemical resistance, and appearance may be excellent. As a preferred example, based on a total weight of the base resin, the recycled thermoplastic resin (B) is included in an amount of 20 to 80 % by weight, more preferably 25 to 75 % by weight, still more preferably 30 to 75 % by weight. Within this range, mechanical properties, moldability, appearance, and physical property balance may be excellent.

The recycled thermoplastic resin (B) includes one or more selected from the group consisting of a recycled vinyl cyanide compound-conjugated diene compound-aromatic vinyl compound copolymer (hereinafter referred to as "recycled ABS-based resin"), a recycled polycarbonate resin (hereinafter referred to as "recycled PC-based resin"), and a recycled aromatic vinyl compound-vinyl cyanide compound copolymer (hereinafter referred to as "recycled SAN-based resin"). In this case, mechanical properties, moldability, chemical resistance, and appearance may be excellent, without being limited thereto.

As a preferred example, units constituting the recycled ABS-based resin and the recycled SAN-based resin may be selected within the same range as described in the non-recycled thermoplastic copolymer (A).

The type of the recycled PC-based resin is not particularly limited. For example, the resin (E) may be a resin obtained by polymerizing a bisphenol-based monomer and a carbonate precursor.

For example, the bisphenol-based monomer may include one or more selected from the group consisting of bis(4-hydroxyphenyl) methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A; BPA), 2,2-bis(4-hydroxyphenyl)butane, 1,1-bis(4-hydroxyphenyl)cyclohexane (bisphenol Z; BPZ), 2,2-bis(4-hydroxy-3,5-dibromophenyl)propane, 2,2-bis(4-hydroxy-3,5-dichlorophenyl)propane, 2,2-bis(4-hydroxy-3-bromophenyl) propane, 2,2-bis(4-hydroxy-3chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and $\alpha,\omega$-bis[3-(o-hydroxyphenyl)propyl]polydimethylsiloxane.

For example, the carbonate precursor may include one or more selected from the group consisting of dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, bis(diphenyl) carbonate, carbonyl chloride (phosgene), triphosgene, diphosgene, carbonyl bromide, and bishaloformate.

For example, the recycled PC-based resin may include one or more selected from the group consisting of a linear polycarbonate resin, a branched polycarbonate resin, and a polyester carbonate copolymer resin, preferably a linear polycarbonate resin. In this case, fluidity may be improved, and thus appearance may be excellent.

As a specific example, the linear polycarbonate resin may be a bisphenol A-based polycarbonate resin, without being limited thereto.

For example, the recycled thermoplastic resin (B) may further include one or more selected from the group consisting of a recycled polyethylene resin, a recycled polypropylene resin, a recycled polyester resin, a recycled polystyrene-based resin, a recycled polyamide resin, and a recycled polyvinyl chloride resin. In this case, by using various recycled resins, a composition having excellent physical properties may be provided.

For example, the recycled thermoplastic resin (B) may have a weight average molecular weight of 10,000 to 1,000,000 g/mol, 15,000 to 900,000 g/mol, or 20,000 to 900,000 g/mol. Within this range, mechanical properties, such as impact strength, and appearance may be excellent, but the present invention is not limited thereto.

For example, the recycled thermoplastic resin (B) may have a glass transition temperature of 60 to 180 °C, preferably 63 to 170 °C, more preferably 65 to 160 °C. Within this range, mechanical properties and moldability may be excellent.

In this description, glass transition temperature (Tg) may be measured at a temperature increasing rate of 10 °C/min using a differential scanning calorimeter (Q100 DSC, TA Instruments Co.) according to ASTM D 3418.

For example, as the recycled thermoplastic resin (B), a commercially available product may be used as long as the product follows the definition of the present invention.

## (C) Ethylene compound-vinyl acetate compound copolymer

Based on 100 parts by weight of the base resin, the ethylene compound-vinyl acetate compound copolymer (C) (hereinafter referred to as "copolymer (C)") may be included in an amount of 1 to 10 parts by weight, preferably 1 to 8 parts by weight, more preferably 1 to 6 parts by weight. In this case, chemical resistance and appearance may be excellent, and physical property retention rate may be excellent even when molding process is repeated. In particular, as a preferred example, based on 100 parts by weight of the base resin, the copolymer (C) is included in an amount of 1 to 5 parts by weight, more preferably 1 to 4 parts by weight, as another preferred example, 2 to 4 parts by weight. In this case, chemical resistance and appearance may be excellent, physical property retention rate may be excellent even when molding is repeated, and occurrence of peeling in the cross section of a molded article may be prevented.

As a preferred example, the copolymer (C) includes a crystalline unit in an amount of 50 % by weight or more, more preferably 60 to 95 % by weight, still more preferably 65 to 90 % by weight. Within this range, chemical resistance and appearance may be excellent, and physical property retention rate may be excellent even when molding is repeated. In this case, the crystalline unit refers to a unit derived from a monomer capable of forming crystals, and specifically refers to a unit derived from an ethylene compound.

For example, the copolymer (C) may include 50 to 95 % by weight of an ethylene compound and 5 to 50 % by weight of a vinyl acetate compound, preferably 70 to 95 % by weight of an ethylene compound and 5 to 30 % by weight of a vinyl acetate compound, more preferably 75 to 95 % by weight of an ethylene compound and 5 to 25 % by weight of a vinyl acetate compound, still more preferably 80 to 90 % by weight of an ethylene compound and 10 to 20 % by weight of a vinyl acetate compound. Within this range, chemical resistance and appearance may be excellent, and physical property retention rate may be excellent even when molding is repeated. As additionally preferred example, the copolymer (C) includes 60 to 85 % by weight of an ethylene compound and 15 to 40 % by weight of a vinyl acetate compound, more preferably 60 to 80 % by weight of an ethylene compound and 20 to 40 % by weight of a vinyl acetate compound, still more preferably 65 to 80 % by weight of an ethylene compound and 20 to 35 % by weight of a vinyl acetate compound. Within this range, impact strength and appearance may be excellent, and physical property retention rate may be excellent even when molding is repeated.

The ethylene compound-vinyl acetate compound copolymer may be prepared by a method commonly used in the art to which the present invention pertains, without particular limitation.

For example, when the copolymer (C) is prepared, based on 100 parts by weight in sum of the ethylene compound and the vinyl acetate compound, 50 to 95 parts by weight of the ethylene compound, 5 to 50 parts by weight of the vinyl acetate compound, and 0.001 to 0.1 parts by weight of an initiator may be fed into a reactor, and a step of polymerizing free radicals may be performed.

For example, polymerization reaction of the copolymer (C) may be performed at a temperature of 130 to 300 °C under a pressure of 500 bar or more, preferably at a temperature of 150 to 300 °C under a pressure of 700 to 5,000 bar, more preferably at a temperature of 150 to 250 °C under a pressure of 800 to 4,000 bar. Within this range, a high polymerization conversion rate may be obtained, and polymerization reaction efficiency may be excellent.

In this description, other additives not specifically mentioned, such as initiators or chain transfer agents, may be appropriately selected according to need. The other additives are not particularly limited as long as the other additives are within a range commonly applied when an ethylene compound-vinyl acetate compound copolymer is prepared.

For example, as the copolymer (C), a commercially available product may be used as long as the commercially available product follow the definition of the present invention.

For example, the copolymer (C) may have a weight average molecular weight of 10,000 to 800,000 g/mol or 30,000 to 700,000 g/mol. Within this range, moldability and chemical resistance may be excellent, but the present invention is not limited thereto.

For example, the copolymer (C) may have a molecular weight distribution (PDI) of 1.5 to 3.0, preferably 2.0 to 2.5. Within this range, moldability and appearance may be excellent, but the present invention is not limited thereto.

In this description, molecular weight distribution (PDI) is defined as $M_w/M_n$. In this case, $M_w$ and $M_n$ mean weight average molecular weight and number average molecular weight, respectively.

The weight average molecular weight and number average molecular weight of the copolymer (C) may be measured using a method commonly practiced in the art to which the present invention pertains. As a specific example, the weight average molecular weight and the number average molecular weight may be measured using a trichlorobenzene (TCB) solvent as an eluate through gel permeation chromatography (GPC, Waters Breeze). In this case, the weight average molecular weight and the number average molecular weight are obtained as relative values to a polystyrene (PS) standard sample. As a specific measurement example, the weight average molecular weight and the number average molecular weight may be measured under conditions of solvent: TCB + 0.015 % by weight of butylated hydroxytoluene (BHT), column temperature: 160 °C, flow rate: 1.0 ml/min, sample concentration: 1.0 mg/ml, injection amount: 200 μl, column model: 3 × PLgel 10 μm MIXED-B (300 × 7.5mm), equipment name: Agilent PL-PGC 220, refractive index detector: Agilent G1362 RID, RI temperature: 160 °C, data processing: Agilent ChemStation S/W, and test method (Mn, Mw and PDI): OECD TG 118.

For example, the copolymer (C) may have a melt index of 2 to 50 g/10 min, preferably 15 to 30 g/10 min as measured under conditions of 190 °C and 2.16 kg according to ASTM D1238. Within this range, appearance may be excellent without deterioration in other physical properties.

### (D) Inorganic pigment

For example, based on 100 parts by weight of the base resin, the inorganic pigment (D) may be included in an amount of 0.01 to 10 parts by weight, preferably 0.05 to 10 parts by weight, more preferably 0.1 to 10 parts by weight, still more preferably 0.5 to 7 parts by weight, still more preferably 1 to 5 parts by weight, still more preferably 1 to 4 parts by weight. Within this range, mechanical properties and appearance may be excellent without deterioration in other physical properties.

It is advantageous in terms of improving appearance to use the inorganic pigment (D) having a refractive index of 1.65 or more. The inorganic pigment (D) preferably has a refractive index of 1.65 to 3.0, more preferably 1.7 to 2.8, still more preferably 1.75 to 2.75.

In this description, the refractive index of the inorganic pigment may be measured at 25 °C using REICHERT MARK 2 PLUS according to ASTM D 542-50.

It is advantageous in terms of improving mechanical properties and appearance to use the inorganic pigment (D) having an average particle diameter of 10 to 500 nm. The inorganic pigment (D) preferably has an average particle diameter of 50 to 400 nm, more preferably 50 to 300 nm.

In this description, unless otherwise specified, the average particle diameter of the inorganic pigment may be measured using BET analysis equipment. Specifically, the average particle diameter of the inorganic pigment may be measured using BET analysis equipment (surface area and porosity analyzer ASAP 2020, Micromeritics Co.) according to a nitrogen gas adsorption method.

For example, the inorganic pigment (D) may include one or more selected from the group consisting of titanium dioxide, zinc oxide, zinc sulfide, aluminum hydroxide, iron oxide, magnesium oxide, calcium carbonate, barium sulfate, clay, carbon black, and white carbon, preferably one or more selected from the group consisting of titanium dioxide, zinc oxide, and carbon black, more preferably titanium dioxide or carbon black. In this case, appearance may be excellent without deterioration in other physical properties.

## Thermoplastic resin composition

The thermoplastic resin composition of the present invention includes 100 parts by weight of a base resin including 20 to 90 % by weight of a non-recycled thermoplastic resin (A) and 10 to 80 % by weight of a recycled thermoplastic resin (B), 1 to 10 parts by weight of an ethylene compound-vinyl acetate compound copolymer (C) and 0.01 to 10 parts by weight of an inorganic pigment (D). In this case, the mechanical properties, moldability, and chemical resistance of a conventional ABS-based resin may be maintained, and deterioration in physical properties due to repeated molding may be prevented, thereby increasing a physical property retention rate.

The inorganic pigment (D) preferably has a refractive index of 1.65 or more and an average particle diameter of 10 to 500 nm.

For example, the thermoplastic resin composition may have a melt index retention rate of 80 % or more, preferably 85 % or more, more preferably 90 % or more as measured by Equation 1 below. Even when a high-temperature molding process such as extrusion is repeatedly performed, a recycled resin composition having excellent physical property retention rate, which is advantageous for quality uniformity, and excellent mechanical properties, chemical resistance, and appearance may be provided.

[Equation 1]

$$\text{Melt index retention rate (\%)} = [MI_{n+5}/MI_n] \times 100$$

In Equation 1, $MI_n$ is a melt index value (g/10 min) as measured at 220 °C under a load of 10 kg according to ASTM D1238 after extruding the thermoplastic resin composition n times at 200 to 250 °C and 250 to 400 rpm, and $MI_{n+5}$ is a melt index value (g/10 min) as measured after repeatedly performing extrusion n+5 times under the same conditions. In this case, n is an integer from 1 to 10.

For example, the thermoplastic resin composition may have an impact strength retention rate of 80 % or more, preferably 85 % or more, more preferably 90 % or more as measured by Equation 2 below. Even when a high-temperature molding process such as extrusion is repeatedly performed, a recycled resin composition having excellent physical property retention rate, which is advantageous for quality uniformity, and excellent mechanical properties, chemical resistance, and appearance may be provided.

Impact strength retention rate (%) = $[ImSt_{n+5}/ImSt_n] \times 100$ [Equation 2]

In Equation 2, $ImSt_n$ is an Izod impact strength value (kgf·cm/cm) as measured under a condition of specimen thickness of 1/8" according to ASTM D256 after extruding the thermoplastic resin composition n times at 200 to 250 °C and 250 to 400 rpm, and $ImSt_{n+5}$ is an Izod impact strength value (kgf·cm/cm) as measured after repeatedly performing extrusion n+5 times under the same conditions. In this case, n is n is an integer from 1 to 10.

In Equations 1 and 2, n may independently be 0 to 10, 0 to 7, 0 to 5, or 0 to 3, as a preferred example, 1 to 8, 1 to 6, 1 to 5, or 1 to 4.

When the thermoplastic resin composition of the present invention is prepared, by adjusting a composition ratio to the specific range as described above, mechanical properties, chemical resistance, and appearance may be greatly improved even through an excess of a recycled resin is included. In addition, even when a high-temperature molding process such as extrusion is repeated 5 times or more, deterioration in physical properties may be prevented, thereby greatly increasing the usage amount of a recycled resin and the number of reuse of the recycled resin.

For example, when the thermoplastic resin composition is prepared according to the specific composition ratio, when a specimen therefrom having a size of 200 mm × 10.0 mm × 3.2 mm is fixed to a curved jig having a strain of 1 %, 1 cc of a Nanox detergent is applied thereto, and then time at which cracks having a diameter of 3 mm or more occur on the surface of the specimen is measured, the thermoplastic resin composition has a chemical resistance of 20 hours or more, showing excellent chemical resistance (environmental stress-cracking resistance, ESCR). For example, when chemical resistance meets the range, occurrence of cracks due to organic solvents and detergents used in post-processing processes such as painting and deposition may be prevented. As another example, when the thermoplastic resin composition is used as a vehicle air vent component, occurrence of cracks due to a vehicle air freshener may be prevented. Accordingly, the thermoplastic resin composition may be applied to various fields, and has an effect of preventing deterioration of a product.

In this description, as a specific example, chemical resistance may be measured at 23 °C using a liquid Nanox detergent.

The Nanox detergent is widely known as a highly concentrated detergent compared to commonly used household laundry detergents. In the case of household laundry detergents, the concentration of a surfactant is generally about 20 to 30 % by weight. On the other hand, the Nanox detergent contains 50 to 60 % by weight of a surfactant and is known to have strong cleaning power. However, as an example, when the Nanox detergent is used in a general washing machine, cracks occur in a plastic (thermoplastic resin) material inside the washing machine that is in direct contact with the Nanox detergent. That is, the Nanox detergent may cause chemical deterioration of plastic materials mainly used in home appliances, and in severe cases, cause malfunction of home appliances. The thermoplastic resin composition of the present invention has excellent chemical resistance to the Nanox detergent. Accordingly, when the thermoplastic resin composition of the present invention is applied to a material for home appliances such as a washing machine, the lifespan of the product may be increased due to excellent long-term durability. In particular, when the thermoplastic resin is applied to interior materials for a washing machine, a dishwasher, and the like, there is an advantage in that various detergents may be used.

For example, the thermoplastic resin composition may have a melt index of 15.0 g/10 min or more, preferably 15.0 to 40 g/10 min, more preferably 17.0 to 40 g/10 min, still more preferably 20 to 38 g/10 min as measured at 220 °C under a load of 10 kg according to ASTM D1238. Within this range, moldability and appearance may be excellent without deterioration in other physical properties.

For example, the thermoplastic resin composition may have an Izod impact strength of 17 kgf·cm/cm or more, preferably 17 to 50 kgf·cm/cm, more preferably 20 to 45 kgf·cm/cm as measured using a specimen having a thickness of 1/8" according to ASTM D256. Within this range, mechanical strength may be excellent without deterioration in other physical properties.

For example, the thermoplastic resin composition may have a tensile strength of 380 kg/cm$^2$ or more, preferably 380 to 500 kg/cm$^2$, more preferably 400 to 480 kg/cm$^2$ as measured at a tensile speed of 50 mm/min using a specimen having a thickness of 1/8" according to ASTM D638. Within this range, mechanical strength may be excellent without deterioration in other physical properties.

## Method of preparing thermoplastic resin composition

The thermoplastic resin composition of the present invention may be prepared by kneading and extruding 100 parts by weight of a base resin including 20 to 90 % by weight of a non-recycled thermoplastic resin (A) and 10 to 80 % by weight of a recycled thermoplastic resin (B); 1 to 10 parts by weight of an ethylene compound-vinyl acetate compound copolymer (C); and 0.01 to 10 parts by weight of an inorganic pigment (D) at 200 to 280 °C. In this case, even though an excess of a recycled resin is included, the intrinsic physical properties of an existing ABS-based resin may be maintained, and appearance and physical property retention rate may be excellent even when molding is repeated.

The inorganic pigment (D) preferably has a refractive index of 1.65 or more and an average particle diameter of 10 to 500 nm.

For example, the kneading and extrusion step may be performed at a temperature of 200 to 280 °C and a screw rotation speed of an extruder of 250 to 600 rpm, preferably at a temperature of 210 to 250 °C and a screw rotation speed of an extruder of 300 to 550 rpm. In this case, mechanical properties, chemical resistance, heat resistance, and appearance may be excellent.

For example, the kneading and extrusion step may be performed using one or more selected from a single-screw extruder, a twin-screw extruder, and a Banbury mixer. The kneading and extrusion step may be performed by uniformly mixing components using the single-screw extruder, the twin-screw extruder, or the Banbury mixer and performing extrusion to obtain a thermoplastic resin composition in pellet form. In this case, deterioration of mechanical properties and heat resistance may be prevented, and appearance may be excellent.

When necessary, in the kneading and extrusion step, the thermoplastic resin composition may further include one or more additives selected from the group consisting of a lubricant, a heat stabilizer, a light stabilizer, an antioxidant, a UV stabilizer, a dye, a colorant, a release agent, an antistatic agent, an antibacterial agent, a processing aid, a compatibilizer, a metal deactivator, a flame retardant, a smoke suppressant, an anti-drip agent, a foaming agent, a plasticizer, a reinforcing agent, a filler, a matte agent, an anti-friction agent, and an anti-wear agent.

Based on 100 parts by weight in sum of the non-recycled thermoplastic resin (A), the recycled thermoplastic resin (B), the copolymer (C), and the inorganic pigment (D), the additives may be further included in an amount of 0.01 to 20 parts by weight, preferably 0.05 to 10 parts by weight, 0.05 to 5 parts by weight, or 0.05 to 3 parts by weight. Within this range, required physical properties may be efficiently expressed without deterioration in the intrinsic physical properties of the thermoplastic resin composition.

For example, the lubricant may include one or more selected from ethylene bis stearamide, oxidized polyethylene wax, magnesium stearate, calcium stearamide, stearic acid, and silicone oil, without being limited thereto.

For example, the silicone oil may include one or more selected from the group consisting of dimethyl silicone oil, methyl hydrogen silicone oil, ester-modified silicone oil, hydroxy silicone oil, carbinol-modified silicone oil, vinyl silicone oil, and silicone acrylate.

For example, as the antioxidant, phenolic antioxidants, phosphorus antioxidants, and the like may be used, without being limited thereto.

For example, as the antistatic agent, one or more selected from anionic surfactants and nonionic surfactants may be used, without being limited thereto.

For example, as the release agent, one or more selected from glycerin stearate and polyethylene tetrastearate may be used, without being limited thereto.

### Molded article

The molded article of the present invention includes the thermoplastic resin composition of the present invention. In this case, even though a recycled resin is included, mechanical properties, moldability, chemical resistance, and appearance may be excellent, and physical property retention rate may be excellent even when molding is repeated.

For example, the molded article may be manufactured by injecting the thermoplastic resin composition or pellets thereof.

For example, the injection processing may be performed at an injection temperature of 220 to 280 °C under a holding pressure of 10 to 200 bar. At this time, mold temperature may be 50 to 120 °C, preferably 55 to 100 °C.

The molded article has excellent mechanical strength, appearance, and chemical resistance, and thus may be used in housings and parts of electronic products such as home appliances or OA devices.

For example, when the surface of the molded article is observed using an optical microscope, the number of foreign substances having a diameter of 100 $\mu$m or more may be less than 15 pieces/100 cm$^2$, preferably less than or equal to 10 pieces/100 cm$^2$, more preferably less than or equal to 8 pieces/100 cm$^2$, still more preferably less than or equal to 7 pieces/100 cm$^2$. Within this range, appearance and physical property balance may be excellent.

In this description, when foreign substances present in the molded article were checked, a specimen having a thickness of 3 mm, a width of 10 cm, and a length of 10 cm (observation area: 100 cm$^2$) was observed using an optical microscope (OM) (magnification 100×). At this time, the number of foreign substances having a diameter of 100 $\mu$m or more was visually counted. As a preferred example, the number of foreign substances present in the molded article was counted 3 or more times, as a specific example, 5 times, and the measured values were averaged.

Since the molded article includes the thermoplastic resin composition of the present invention, compared to a molded article manufactured using a conventional recycled resin composition, the number of foreign substances is greatly reduced. In addition, the thermoplastic resin composition of the present invention has a foreign substance shielding effect that minimizes migration of foreign substances to the surface of the molded article. Thus, even when foreign substances are present in the molded article, the foreign substances are not conspicuous, thereby further improving appearance.

Hereinafter, the present invention will be described in more detail with reference to the following preferred examples.

### [Examples]

Materials used in Examples, Comparative Examples, and Reference Example below are as follows.

(A-1) Vinyl cyanide compound-conjugated diene compound-aromatic vinyl compound graft copolymer: ABS graft copolymer (DP270 manufactured by LG Chemical Co.) in which the average particle diameter of conjugated diene rubber including a conjugated diene compound is 3,200 Å and the content of the conjugated diene rubber is 60 % by weight

(A-2) Aromatic vinyl compound-vinyl cyanide compound copolymer: SAN resin (weight average molecular weight: 110,000 g/mol, 83SF manufactured by LG Chemical Co.) including 23 % by weight of an acrylonitrile-derived unit and 77 % by weight of a styrene-derived unit

(B-1) Recycled vinyl cyanide compound-conjugated diene compound-aromatic vinyl compound copolymer: Recycled ABS resin (A204 manufactured by CNTech Korea Co.) having a melt index (220 °C, 10 kg) of 22 g/10 min and a color L value* of 31 as measured using a color-difference meter (Device name: Ci7860, X-Rite Co.)

(B-2) Recycled vinyl cyanide compound-conjugated diene compound-aromatic vinyl compound copolymer: Recycled ABS resin (A205LC manufactured by CNTech Korea Co.) having a melt index (220 °C, 10 kg) of 16 g/10 min and a color L value* of 85 as measured using a color-difference meter (Device name: Ci7860, X-Rite Co.)

(B-3) Recycled aromatic vinyl compound-vinyl cyanide compound copolymer: Recycled SAN resin (S601 manufactured by CNTech Korea Co.) having a melt index (220 °C, 10 kg) of 37 g/10 min

(B-4) Recycled polycarbonate resin: Bisphenol A-type recycled polycarbonate resin (PC PW 20HT manufactured by Easychem Co.) having a melt index (300 °C, 1.2 kg) of 20 g/10 min

(C-1) Ethylene compound-vinyl acetate compound copolymer: EVA resin (EVEA28025 manufactured by LG Chemical Co.) having a melt index (190 °C, 2.16 kg) of 25 g/10 min and including 72 % by weight of an ethylene compound-derived unit and 28 % by weight of a vinyl acetate compound-derived unit

(C-2) Ethylene compound-methyl acrylate compound copolymer: EMA resin (Elvaloy AC 1224 manufactured by Dupont Co.) having a melt index (190 °C, 2.16 kg) of 2 g/10 min and including 76 % by weight of an ethylene compound-derived unit and 24 % by weight of a methyl acrylate compound-derived unit

(D-1) Inorganic pigment: Titanium dioxide (R350 manufactured by Dupont Co.) having a refractive index of 2.73 and an average particle diameter of 250 nm

(D-2) Inorganic pigment: Carbon black (HIBLACK 170 manufactured by Orion Engineered Carbons Co.) having a refractive index of 1.75 and an average particle diameter of 58 nm

(D-3) Inorganic pigment: Diatomite ($SiO_2nH_2O$ manufactured by Dong-Sin Co., 325 mesh) having a refractive index of 1.46 and an average particle diameter of 45 $\mu$m

* Color L value: Color L value means the L value of color coordinates based on a CIE 1976 L*a*b* color system. L value ranges from 0 and 100. As L value approaches 0, the degree of blackness increases. As L value approaches 100, the degree of whiteness increases.

## Examples 1 to 7, Comparative Examples 1 to 11, and Reference Example

According to the contents shown in Tables 1 and 2, the non-recycled graft copolymer (A-1); the non-recycled copolymer (A-2); the recycled thermoplastic resins (B-1) to (B-4); the copolymer (C-1) or (C-2); and the inorganic pigment (D-1) or (D-2) were mixed using a super mixer, and then the mixture was extruded at an extrusion temperature of 230 °C and a screw rotation rate of 320 rpm using a twin-screw extruder (screw diameter: 26 mm, L/D=40) to obtain pellets.

The prepared thermoplastic resin composition in pellet form was dried at 80 °C for 4 hours or more, and then was injection-molded at an injection temperature of 240 °C, a mold temperature of 60 °C, and an injection rate of 30 mm/sec using an injection machine to obtain a specimen. The specimen was allowed to stand at room temperature (20 to 26 °C) for 48 hours or more, and then the physical properties thereof were measured.

In addition, extrusion of the prepared pellets was additionally performed five more times under the same extrusion conditions as above, that is, a total of six extrusion processes were performed. Then, the pellets were injection-molded under the same conditions as above, and were allowed to stand at room temperature (20 to 26 °C) for 48 hours to obtain a specimen. The physical property retention rate of the prepared specimen was measured.

## [Test Examples]

The physical properties of specimens prepared in Examples, Comparative Examples, and Reference Example were measured according to the following methods, and the results are shown in Table 2 below.
* Melt flow index (g/10 min): Melt flow index was measured at 220 °C under a load of 10 kg for 10 minutes according to ASTM D1238.

* Izod impact strength (kgf·cm/cm): Izod impact strength was measured at 23 °C using a specimen having a thickness of 1/8" according to ASTM D256.

* Tensile strength (kg/cm$^2$): Tensile strength was measured at 23 °C and test speed of 50 mm/min using a specimen having a thickness of 1/8" according to ASTM D638.

* Surface foreign substances (pieces/100 cm$^2$): A specimen having a thickness of 3 mm, a width of 10 cm, and a length of 10 cm was prepared using the prepared pellets, and the surface of the specimen was observed using an optical microscope (Device name: VHX-5000, magnification 100×, KEYENCE CORPORATION Co.,). At this time, the number of foreign substances having a diameter of 100 $\mu$m or more was visually counted several times, and the average value was calculated.

\* Chemical resistance (h): A specimen having a size of 200 mm × 10.0 mm × 3.2 mm was prepared using the prepared pellets, the specimen was fixed to a curved jig having a strain of 1 %, 1 cc of a Nanox detergent (LION Co.) was applied thereto, and then time (hour) at which cracks having a diameter of 3 mm or more occurred on the surface of the specimen was measured.

\* Peeling: After breaking a specimen having a size of 200 mm × 10.0 mm × 3.2 mm by making a cut using a cutter knife in the width direction at the center of the upper surface of the specimen, occurrence of peeling was visually checked. The degree of occurrence of peeling was indicated by X, △, O. At this time, when peeling occurred, it was observed whether a peeled thin film was easily torn by pulling the peeled thin film by hand. (X: no peeling occurs, △: peeling is observed in a part of a cross section, but a peeled thin film is not easily torn, O: severe peeling is observed in a cross section and a peeled thin film is easily torn)

\* Physical property retention rate: For each of physical properties, the measured value of physical properties (Physical properties after 5 additional extrusion processes) after 5 additional extrusion processes, i.e., a total of 6 extrusion processes, was expressed as a percentage (%) with respect to the measured value of physical properties (Initial physical properties) after one extrusion process.

More specifically, the measured value of each of physical properties was substituted into Equation A below.

Physical property retention rate (%) = [(Physical properties after 5 additional extrusion processes)/(Initial physical properties)] × 100     [Equation A]

In Equation A, the physical properties may be melt flow index, impact strength, or tensile strength.

As another example, physical property retention rate may be calculated by Equations 1 and 2.

[Table 1]

| Classification (parts by weight) | | Examples | | | | | | | Reference Example |
|---|---|---|---|---|---|---|---|---|---|
| | | 1 | 2 | 3 | 4 | 5 | 6 | 7 | 1 |
| A-1 | g-ABS | 18 | 15 | 12 | 19 | 17 | 19 | 18 | 27 |
| A-2 | SAN | 49 | 30 | 13 | 26 | 28 | 26 | 49 | 73 |
| Sum of non-recycled resins | | 67 | 45 | 25 | 45 | 45 | 45 | 67 | 100 |
| B-1 | Recycled ABS (Black) | 33 | 55 | 75 | - | - | - | 33 | - |
| B-2 | Recycled ABS (Gray) | - | - | - | 40 | 25 | 40 | - | - |
| B-3 | Recycled SAN | - | - | - | 15 | - | 15 | - | - |
| B-4 | Recycled PC | - | - | - | - | 30 | - | - | - |
| Sum of recycled resins | | 33 | 55 | 75 | 55 | 55 | 55 | 33 | - |
| C-1 | EVA | 1 | 2 | 4 | 2 | 2 | 2 | 8 | - |
| C-2 | EMA | - | - | - | - | - | - | - | - |
| D-1 | TiO$_2$ | 0.5 | 1.0 | 1.0 | 2.0 | 4.0 | 7.0 | 0.5 | - |
| D-2 | Carbon black | 0.5 | 1.0 | 2.0 | - | - | - | 0.5 | - |
| D-3 | Diatomite | - | - | - | - | - | - | - | - |

(continued)

| Classification (parts by weight) | | Examples | | | | | | | Reference Example |
|---|---|---|---|---|---|---|---|---|---|
| | | 1 | 2 | 3 | 4 | 5 | 6 | 7 | 1 |
| Initial physical properties (n=1) | MI | 25.8 | 26.5 | 25.7 | 35.9 | 17.2 | 35.5 | 27.0 | 41.1 |
| | Impact strength | 24.8 | 26.0 | 25.0 | 25.8 | 43.6 | 19.7 | 27.4 | 31.1 |
| | Tensile strength | 428.0 | 404.0 | 384.0 | 402.0 | 476.0 | 413.0 | 410.0 | 412.0 |
| | Foreign substances | 4.0 | 5.0 | 8.0 | 3.0 | 3.0 | 2.0 | 2.0 | 0 |
| | Chemical resistance | 32.0 | 41.0 | 38.5 | 38.0 | 25.0 | 38.0 | 51.0 | 20.5 |
| | Whether peeling occurred | X | X | X | X | X | X | Δ | X |
| Physical properties after 5 additional extrusion processes | MI | 24.1 | 24.8 | 23.6 | 36.6 | 17.1 | 36.3 | 26.0 | 40.2 |
| | Impact strength | 24.1 | 25.6 | 22.7 | 25.3 | 43.0 | 18.6 | 26.9 | 29.4 |
| | Tensile strength | 423.0 | 393.0 | 368.0 | 399.0 | 470.0 | 407.0 | 401.0 | 423.0 |
| Physical property retention rate (%) | MI | 93.4 | 93.6 | 91.8 | 101.9 | 99.4 | 102.3 | 96.3 | 97.8 |
| Physical property retention rate (%) | Impact strength | 97.2 | 98.5 | 90.8 | 98.1 | 98.6 | 94.4 | 98.2 | 94.5 |
| Physical property retention rate (%) | Tensile strength | 98.8 | 97.3 | 95.8 | 99.3 | 98.7 | 98.5 | 97.8 | 102.7 |

[Table 2]

| Classification (parts by weight) | | Comparative Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 |
| A-1 | g-ABS | 18 | 15 | 12 | 19 | 19 | 19 | 17 | 19 | 18 | 19 | 18 |
| A-2 | SAN | 49 | 30 | 13 | 26 | 26 | 26 | 28 | 26 | 49 | 26 | 49 |
| Sum of non-recycled resins | | 67 | 45 | 25 | 45 | 45 | 45 | 45 | 45 | 67 | 45 | 67 |
| B-1 | Recycled ABS (Black) | 33 | 55 | 75 | - | - | - | - | - | 33 | - | 33 |
| B-2 | Recycled ABS (Gray) | - | - | - | 40 | 40 | 40 | 25 | 40 | - | 40 | - |
| B-3 | Recycled SAN | - | - | - | 15 | 15 | 15 | | 15 | - | 15 | - |
| B-4 | Recycled PC | - | - | - | - | - | - | 30 | - | - | - | - |
| Sum of recycled resins | | 33 | 55 | 75 | 55 | 55 | 55 | 55 | 55 | 33 | 55 | 33 |
| C-1 | EVA | - | - | - | - | - | 0.5 | - | - | 12 | 2 | 1 |
| C-2 | EMA | - | - | - | - | - | - | - | 2 | - | - | - |
| D-1 | $TiO_2$ | - | - | - | - | 2 | - | - | 7 | 0.5 | 12 | - |
| D-2 | Carbon black | - | - | - | - | - | - | - | - | 0.5 | - | - |
| D-3 | Diatomite | - | - | - | - | - | - | - | - | - | - | 4 |
| Initial physical properties (n=1) | MI | 26.0 | 27.3 | 26.0 | 39.0 | 38.0 | 38.0 | 15.7 | 31.5 | 28.0 | 21.0 | 25.0 |
| | Impact strength | 23.1 | 23.0 | 21.0 | 23.7 | 22.5 | 23.0 | 43.1 | 15.8 | 26.3 | 16.0 | 22.0 |
| | Tensile strength | 431.0 | 410.0 | 396.0 | 412.0 | 405.0 | 405.0 | 480.0 | 418.0 | 405.0 | 411.0 | 423.0 |
| | Foreign substances | 19.0 | 24.0 | 31.0 | 18.0 | 13.0 | 15.0 | 15.0 | 7.0 | 15.0 | 6.0 | 17.0 |
| | Chemical resistance (h) | 16.0 | 12.5 | 8.5 | 16.5 | 17.5 | 22.0 | 10.5 | 43.0 | 56.0 | 14.0 | 15.8 |
| | Whether peeling occurred | X | X | X | X | X | X | X | X | O | X | X |
| Physical properties after 5 additional extrusion processes | MI | 23.1 | 22.8 | 23.4 | 35.1 | 35.5 | 36.0 | 13.7 | 29.0 | 25.0 | 18.0 | 22.4 |
| | Impact strength | 18.8 | 18.3 | 17.7 | 19.1 | 19.0 | 21.0 | 37.5 | 14.4 | 22.2 | 13.8 | 16.4 |
| | Tensile strength | 410.0 | 397.0 | 350.0 | 387.0 | 390.0 | 396.0 | 460.0 | 408.0 | 392.0 | 395.0 | 412.0 |
| Physical property retention rate (%) | MI | 88.8 | 83.5 | 90.0 | 90.0 | 93.4 | 94.7 | 87.3 | 92.1 | 89.3 | 85.7 | 89.6 |
| | Impact strength | 81.4 | 79.6 | 84.3 | 80.6 | 84.4 | 91.3 | 87.0 | 91.1 | 84.4 | 86.3 | 74.5 |
| | Tensile strength | 95.1 | 96.8 | 88.4 | 93.9 | 96.3 | 97.8 | 95.8 | 97.6 | 96.8 | 96.1 | 97.4 |

As shown in Tables 1 and 2, in the case of Examples 1 to 7 according to the present invention, compared to Comparative Examples 1 to 11 outside the range of the present invention, fluidity, impact strength, tensile strength, chemical resistance, and peeling properties were excellent. In addition, the number of foreign substances observed on a surface was reduced by more than half. In particular, even after 5 additional extrusion processes were performed, physical property retention rate was greatly improved with respect to initial physical properties. In addition, compared to Reference Example 1 not including recycled resins, deterioration of physical properties due to recycled resins observed in Comparative Examples 1 to 11 was alleviated in Examples.

In addition, in the case of Example 3, despite a high total content of recycled resins (75 parts by weight), mechanical properties and chemical resistance were greatly improved, and the number of foreign substances was significantly reduced. In addition, physical property retention rate for molding was greatly improved. In the case of Example 6, despite a high content of the inorganic pigment (7 parts by weight), deterioration of physical properties due to inclusion of an excess of the inorganic pigment was significantly alleviated. In addition, in the case of Examples 1 to 7, peeling properties were excellent. In particular, in the case of Examples 1 to 6, no peeling occurred l, exhibiting excellent peeling properties.

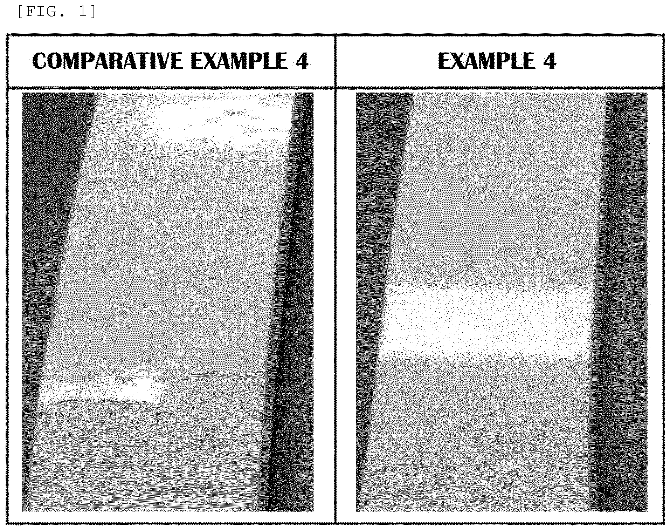

FIG. 1 below shows the chemical resistance test results of Example according to the present invention and Comparative Example, showing images taken 38 hours after applying a Nanox detergent to the surface of a specimen. Referring to FIG. 1 below, in the case of Example, no cracks were observed until 38 hours after application of the detergent. On the other hand, in the case of Comparative Example, cracks were clearly observed with the naked eye. These results indicate that the chemical resistance of Example according to the present invention is greatly improved.

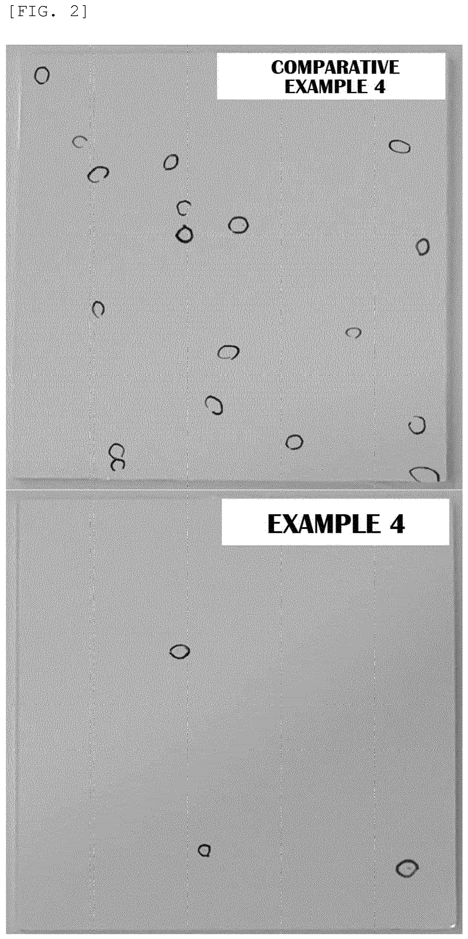

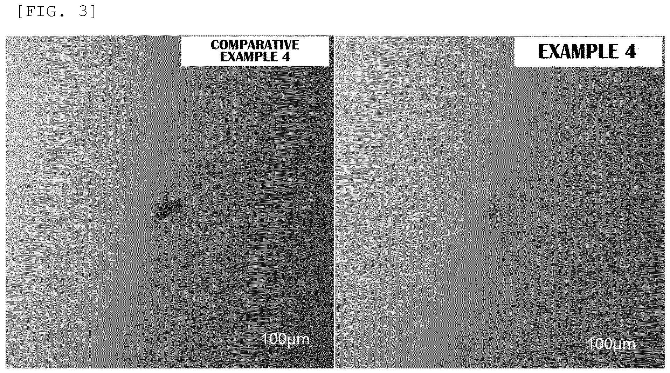

FIG. 2 below includes images showing points where surface foreign substances are generated in an example of the present invention and a comparative example, and FIG. 3 below includes light microscope images of the surface foreign substances of an example of the present invention and a comparative example. Referring to FIGS. 2 and 3, in the case of Example according to the present invention, compared to Comparative Example, the number of foreign substances was significantly reduced. In addition, a foreign substance shielding effect was increased. Thus, even when foreign substances occurred, the foreign substances were not conspicuous, thereby further improving appearance.

**Claims**

1. A thermoplastic resin composition, comprising:

   100 parts by weight of a base resin comprising 20 to 90 % by weight of a non-recycled thermoplastic resin (A) and 10 to 80 % by weight of a recycled thermoplastic resin (B), wherein the non-recycled thermoplastic copolymer (A) comprises 20 to 70 % by weight of a non-recycled vinyl cyanide compound-conjugated diene compound-aromatic vinyl compound graft copolymer (A-1) and 30 to 80 % by weight of a non-recycled aromatic vinyl compound-vinyl cyanide compound copolymer (A-2), and wherein the recycled thermoplastic resin (B) comprises one or more selected from the group consisting of a recycled vinyl cyanide compound-conjugated diene compound-aromatic vinyl compound copolymer, a recycled polycarbonate resin, and a recycled aromatic vinyl compound-vinyl cyanide compound copolymer;
   1 to 10 parts by weight of an ethylene compound-vinyl acetate compound copolymer (C); and
   0.01 to 10 parts by weight of an inorganic pigment (D),
   wherein the inorganic pigment (D) has a refractive index of 1.65 or more and an average particle diameter of 10 to 500 nm, wherein the refractive index and the average particle diameter are measured as disclosed in the specification.

2. The thermoplastic resin composition according to claim 1, wherein the thermoplastic resin composition has a melt index retention rate of 80 % or more as measured by Equation 1 below:

   [Equation 1]

   $$\text{Melt index retention rate (\%)} = [MI_{n+5}/MI_n] \times 100,$$

   wherein $MI_n$ is a melt index value (g/10 min) as measured at 220 °C under a load of 10 kg according to ASTM D1238 after extruding the thermoplastic resin composition n times at 200 to 250 °C and 250 to 400 rpm, and $MI_{n+5}$ is a melt index value (g/10 min) as measured after repeatedly performing extrusion n+5 times under the same conditions, wherein n is an integer from 1 to 10.

3. The thermoplastic resin composition according to claim 1, wherein the thermoplastic resin composition has an impact strength retention rate of 80 % or more as measured by Equation 2 below:

Impact strength retention rate (%) = [ImSt$_{n+5}$/ImSt$_n$] $\times$ 100,                    [Equation 2]

wherein ImSt$_n$ is an Izod impact strength value (kgf·cm/cm) as measured under a condition of specimen thickness of 1/8" according to ASTM D256 after extruding the thermoplastic resin composition n times at 200 to 250 °C and 250 to 400 rpm, and ImSt$_{n+5}$ is an Izod impact strength value (kgf·cm/cm) as measured after repeatedly performing extrusion n+5 times under the same conditions, wherein n is an integer from 1 to 10.

4. The thermoplastic resin composition according to claim 1, wherein, when a specimen having a size of 200 mm $\times$ 10 mm $\times$ 3.2 mm is fixed to a curved jig having a strain of 1 %, 1 cc of a Nanox detergent (LION Co.) is applied thereto, and then time at which cracks occur on a surface of the specimen is measured, the thermoplastic resin composition has a chemical resistance (ESCR) of 20 hours or more.

5. The thermoplastic resin composition according to claim 1, wherein the graft copolymer (A-1) comprises 50 to 80 % by weight of conjugated diene rubber, 5 to 20 % by weight of a vinyl cyanide compound, and 10 to 40 % by weight of an aromatic vinyl compound.

6. The thermoplastic resin composition according to claim 1, wherein the copolymer (A-2) comprises 20 to 40 % by weight of a vinyl cyanide compound and 60 to 80 % by weight of an aromatic vinyl compound.

7. The thermoplastic resin composition according to claim 1, wherein the recycled thermoplastic resin (B) has a glass transition temperature of 60 to 180 °C, wherein the glass transition temperature is measured as disclosed in the specification.

8. The thermoplastic resin composition according to claim 1, wherein the copolymer (C) comprises 50 to 95 % by weight of an ethylene compound and 5 to 50 % by weight of a vinyl acetate compound.

9. The thermoplastic resin composition according to claim 1, wherein the inorganic pigment (D) comprises one or more selected from the group consisting of titanium dioxide, zinc oxide, zinc sulfide, aluminum hydroxide, iron oxide, magnesium oxide, calcium carbonate, barium sulfate, clay, carbon black, and white carbon.

10. A method of preparing a thermoplastic resin composition according to claim 1, comprising a step of kneading and extruding 100 parts by weight of a base resin comprising 20 to 90 % by weight of a non-recycled thermoplastic copolymer (A) and 10 to 80 % by weight of a recycled thermoplastic resin (B), 1 to 10 parts by weight of an ethylene compound-vinyl acetate compound copolymer (C), and 0.01 to 10 parts by weight of an inorganic pigment (D) at 200 to 280 °C, wherein the inorganic pigment (D) has a refractive index of 1.65 or more and an average particle diameter of 10 to 500 nm, wherein the refractive index and the average particle diameter are measured as disclosed in the specification.

11. A molded article, comprising the thermoplastic resin composition according to any one of claims 1 to 9.

12. The molded article according to claim 11, wherein, when a surface of the molded article is observed using an optical microscope, the number of foreign substances having a diameter of 100 $\mu$m or more is less than 15 pieces/100 cm$^2$.


**Patentansprüche**

1. Thermoplastische Harzzusammensetzung, umfassend:

100 Gewichtsteile eines Basisharzes, umfassend 20 bis 90 Gew.-% eines nicht recycelten thermoplastischen Harzes (A) und 10 bis 80 Gew.-% eines recycelten thermoplastischen Harzes (B), wobei das nicht recycelte thermoplastische Copolymer (A) 20 bis 70 Gew.-% eines nicht recycelten Vinylcyanidverbindung-konjugierte-Dienverbindungaromatische-Vinylverbindung-Pfropfcopolymers (A-1) und 30 bis 80 Gew.-% eines nicht recycelten aromatische-Vinylverbindung-Vinylcyanidverbindung-Copolymers (A-2) umfasst, und wobei das recycelte thermoplastische Harz (B) eines oder mehrere, ausgewählt aus der Gruppe, bestehend aus einem recycelten Vinylcyanidverbindung-konjugierte-Dienverbindung-aromatische-Vinylverbindung-Copolymer, einem recycelten Polycarbonatharz und einem recycelten aromatische-Vinylverbindung-Vinylcyanidverbindung-Copolymer, umfasst;

1 bis 10 Gewichtsteile eines Ethylenverbindung-Vinylacetatverbindung-Copolymers (C); und

0,01 bis 10 Gewichtsteile eines anorganischen Pigments (D),

wobei das anorganische Pigment (D) einen Brechungsindex von 1,65 oder mehr und einen durchschnittlichen Teilchendurchmesser von 10 bis 500 nm aufweist, wobei der Brechungsindex und der durchschnittliche Teilchendurchmesser wie in der Beschreibung offenbart gemessen werden.

2. Thermoplastische Harzzusammensetzung nach Anspruch 1, wobei die thermoplastische Harzzusammensetzung eine Schmelzindexretentionsrate von 80 % oder mehr, wie durch die nachstehende Gleichung 1 gemessen, aufweist:

$$[\text{Gleichung 1}]$$
$$\text{Schmelzindexretentionsrate (\%)} = [MI_{n+5}/MI_n] \times 100,$$

wobei $MI_n$ ein Schmelzindexwert (g/10 min), wie bei 220 °C unter einer Last von 10 kg gemäß ASTM D1238 nach n-maligem Extrudieren der thermoplastischen Harzzusammensetzung bei 200 bis 250 °C und 250 bis 400 U/min gemessen, ist und $MI_{n+5}$ ein Schmelzindexwert (g/10 min), wie nach n+5-maligem wiederholten Durchführen von Extrusion unter den gleichen Bedingungen gemessen, ist, wobei n eine ganze Zahl von 1 bis 10 ist.

3. Thermoplastische Harzzusammensetzung nach Anspruch 1, wobei die thermoplastische Harzzusammensetzung eine Schlagfestigkeitsretentionsrate von 80 % oder mehr, wie durch die nachstehende Gleichung 2 gemessen, aufweist:

$$[\text{Gleichung 2}]$$
$$\text{Schlagfestigkeitsretentionsrate (\%)} = [ImStn_{+5}/ImStn] \times 100,$$

wobei ImStn ein Izod-Schlagfestigkeitswert (kgf·cm/cm), wie unter einer Bedingung einer Probendicke von 1/8" gemäß ASTM D256 nach n-maligem Extrudieren der thermoplastischen Harzzusammensetzung bei 200 bis 250 °C und 250 bis 400 U/min gemessen, ist und $ImStn_{+5}$ ein Izod-Schlagfestigkeitswert (kgf·cm/cm), wie nach n+5-maligem wiederholten Durchführen von Extrusion unter den gleichen Bedingungen gemessen, ist, wobei n eine ganze Zahl von 1 bis 10 ist.

4. Thermoplastische Harzzusammensetzung nach Anspruch 1, wobei, wenn eine Probe mit einer Größe von 200 mm × 10 mm × 3,2 mm an einer gekrümmten Einspannvorrichtung mit einer Dehnung von 1 % fixiert wird, 1 cm3 eines Nanox-Detergens (LION Co.) darauf aufgebracht wird und dann die Zeit, zu der Risse auf einer Oberfläche der Probe auftreten, gemessen wird, die thermoplastische Harzzusammensetzung eine chemische Beständigkeit (ESCR) von 20 Stunden oder mehr aufweist.

5. Thermoplastische Harzzusammensetzung nach Anspruch 1, wobei das Pfropfcopolymer (A-1) 50 bis 80 Gew.-% konjugierten Dienkautschuk, 5 bis 20 Gew.-% einer Vinylcyanidverbindung und 10 bis 40 Gew.-% einer aromatischen Vinylverbindung umfasst.

6. Thermoplastische Harzzusammensetzung nach Anspruch 1, wobei das Copolymer (A-2) 20 bis 40 Gew.-% einer Vinylcyanidverbindung und 60 bis 80 Gew.-% einer aromatischen Vinylverbindung umfasst.

7. Thermoplastische Harzzusammensetzung nach Anspruch 1, wobei das recycelte thermoplastische Harz (B) eine Glasübergangstemperatur von 60 bis 180 °C aufweist, wobei die Glasübergangstemperatur wie in der Beschreibung offenbart gemessen wird.

8. Thermoplastische Harzzusammensetzung nach Anspruch 1, wobei das Copolymer (C) 50 bis 95 Gew.-% einer Ethylenverbindung und 5 bis 50 Gew.-% einer Vinylacetatverbindung umfasst.

9. Thermoplastische Harzzusammensetzung nach Anspruch 1, wobei das anorganische Pigment (D) eines oder mehrere, ausgewählt aus der Gruppe, bestehend aus Titandioxid, Zinkoxid, Zinksulfid, Aluminiumhydroxid, Eisenoxid, Magnesiumoxid, Calciumcarbonat, Bariumsulfat, Ton, Ruß und weißem Kohlenstoff, umfasst.

10. Verfahren zum Herstellen einer thermoplastischen Harzzusammensetzung nach Anspruch 1, umfassend einen Schritt des Knetens und Extrudierens von 100 Gewichtsteilen eines Basisharzes, umfassend 20 bis 90 Gew.-% eines nicht recycelten thermoplastischen Copolymers (A) und 10 bis 80 Gew.-% eines recycelten thermoplastischen Harzes (B), 1 bis 10 Gewichtsteile eines Ethylenverbindung-Vinylacetatverbindung-Copolymers (C) und 0,01 bis 10 Gewichtsteile eines anorganischen Pigments (D) bei 200 bis 280 °C, wobei das anorganische Pigment (D) einen Brechungsindex von 1,65 oder mehr und einen durchschnittlichen Teilchendurchmesser von 10 bis 500 nm aufweist, wobei der Brechungsindex und der durchschnittliche Teilchendurchmesser wie in der Beschreibung offenbart gemessen werden.

11. Formkörper, umfassend die thermoplastische Harzzusammensetzung nach einem der Ansprüche 1 bis 9.

12. Formkörper nach Anspruch 11, wobei, wenn eine Oberfläche des Formkörpers unter Verwendung eines optischen Mikroskops betrachtet wird, die Anzahl von Fremdsubstanzen mit einem Durchmesser von 100 $\mu$m oder mehr weniger als 15 Stück/100 cm$^2$ beträgt.

**Revendications**

1. Composition de résine thermoplastique, comprenant :

   100 parties en poids d'une résine de base comprenant 20 à 90 % en poids d'une résine thermoplastique non recyclée (A) et 10 à 80 % en poids d'une résine thermoplastique recyclée (B), dans laquelle le copolymère thermoplastique non recyclé (A) comprend 20 à 70 % en poids d'un copolymère greffé de composé de cyanure de vinyle - composé de diène conjugué - composé de vinyle aromatique non recyclés (A-1) et 30 à 80 % en poids d'un copolymère de composé de vinyle aromatique - composé de cyanure de vinyle non recyclés (A-2), et dans lequel la résine thermoplastique recyclée (B) comprend un ou plusieurs éléments choisis dans le groupe constitué d'un copolymère composé de cyanure de vinyle recyclé, d'un composé diénique conjugué et d'un composé de vinyle aromatique recyclé, d'une résine polycarbonate recyclée et d'un copolymère de composé de vinyle aromatique - composé de cyanure de vinyle recyclés ;
   1 à 10 parties en poids d'un copolymère composé d'éthylène et d'acétate de vinyle (C) ; et
   0,01 à 10 parties en poids d'un pigment inorganique (D),
   dans laquelle le pigment inorganique (D) a un indice de réfraction de 1,65 ou supérieur et un diamètre moyen des particules de 10 à 500 nm, l'indice de réfraction et le diamètre moyen des particules étant mesurés comme indiqué dans la description.

2. Composition de résine thermoplastique selon la revendication 1, dans laquelle la composition de résine thermoplastique a un taux de rétention de l'indice de fusion de 80 % ou supérieur, tel que mesuré par l'équation 1 ci-dessous :

   [Équation 1]

   $$\text{Taux de rétention de l'indice de fusion (\%)} = [MI_{n+5}/MI_n] \times 100,$$

   dans laquelle $MI_n$ représente une valeur d'indice de fusion (g/10 min) mesurée à 220 °C sous une charge de 10 kg conformément à la norme D1238 de l'ASTM après extrusion de la composition de résine thermoplastique n fois à une température comprise entre 200 et 250 °C et à une vitesse comprise entre 250 et 400 tr/min, et $MI_{n+5}$ représente une valeur d'indice de fusion (g/10 min) telle que mesurée après extrusion répétée n+5 fois dans les mêmes conditions, où n s représente un nombre entier compris entre 1 et 10.

3. Composition de résine thermoplastique selon la revendication 1, dans laquelle la composition de résine thermoplastique présente un taux de rétention de la résistance aux chocs de 80 % ou supérieur, tel que mesuré par l'équation 2 ci-dessous :

   [Équation 2]

   $$\text{Taux de rétention de la résistance aux chocs (\%)} = [ImSt_{n+5}/ImSt_n] \times 100,$$

dans laquelle ImSt$_n$ représente une valeur de résilience Izod (kgf-cm/cm) telle que mesurée dans une condition d'épaisseur d'échantillon de 1/8 de pouce selon la norme D256 de l'ASTM après extrusion de la composition de résine thermoplastique n fois à une température comprise entre 200 et 250 °C et à une vitesse comprise entre 250 à 400 tr/min, et IMSt$_{n+5}$ représente une valeur de résilience Izod (kgf-cm/cm) telle que mesurée après extrusion répétée n+5 fois dans les mêmes conditions, où n représente un nombre entier compris entre 1 et 10.

4. Composition de résine thermoplastique selon la revendication 1, dans laquelle, lorsqu'un échantillon ayant une taille de 200 mm × 10 mm × 3,2 mm est fixé à un gabarit incurvé ayant une déformation de 1 %, 1 cc d'un détergent Nanox (LION Co.) y est appliqué, puis le temps au cours duquel des fissures apparaissent sur une surface de l'échantillon est mesuré, la composition de résine thermoplastique ayant une résistance chimique (ESCR) de 20 heures ou plus.

5. Composition de résine thermoplastique selon la revendication 1, dans laquelle le copolymère greffé (A-1) comprend 50 à 80 % en poids de caoutchouc diénique conjugué, 5 à à 20% en poids d'un composé de cyanure de vinyle et 10 à 40 % en poids d'un composé de vinyle aromatique.

6. Composition de résine thermoplastique selon la revendication 1, dans laquelle le copolymère (A-2) comprend 20 à 40 % en poids d'un composé de cyanure de vinyle et 60 à 80 % en poids en poids d'un composé de vinyle aromatique.

7. Composition de résine thermoplastique selon la revendication 1, dans laquelle la résine thermoplastique recyclée (B) a une température de transition vitreuse comprise entre 60 et 180 °C, la température de transition vitreuse étant mesurée comme indiqué dans la description.

8. Composition de résine thermoplastique selon la revendication 1, dans laquelle le copolymère (C) comprend 50 à 95 % en poids d'un composé d'éthylène et 5 à 50 % en poids d'un composé d'acétate de vinyle.

9. Composition de résine thermoplastique selon la revendication 1, dans laquelle le pigment inorganique (D) comprend un ou plusieurs éléments choisis dans le groupe constitué de dioxyde de titane, d'oxyde de zinc, de sulfure de zinc, d'hydroxyde d'aluminium, d'oxyde de fer, d'oxyde de magnésium, de carbonate de calcium, de sulfate de baryum, d'argile, de noir de carbone et de blanc de carbone.

10. Procédé de préparation d'une composition de résine thermoplastique selon la revendication 1, comprenant une étape de malaxage et d'extrusion de 100 parties en poids d'une résine de base comprenant 20 à 90 % en poids d'un copolymère thermoplastique non recyclé (A) et 10 à 80 % en poids d'une résine thermoplastique recyclée (B), 1 à 10 parties en poids d'un copolymère composé d'éthylène - composé d'acétate de vinyle (C), et 0. 01 à 10 parties en poids d'un pigment inorganique (D) à 200 à 280 °C, dans lequel le pigment inorganique (D) a un indice de réfraction de 1,65 ou supérieur et un diamètre moyen des particules de 10 à 500 nm, l'indice de réfraction et le diamètre moyen des particules étant mesurés comme indiqué dans la description.

11. Article moulé, comprenant la composition de résine thermoplastique selon l'une quelconque des revendications 1 à 9.

12. Article moulé selon la revendication 11, dans lequel, lorsqu'une surface de l'article moulé est observée à l'aide d'un microscope optique, le nombre de substances étrangères ayant un diamètre de 100 $\mu$m ou supérieur est inférieur à 15 pièces/100 cm$^2$.

[FIG. 1]

| COMPARATIVE EXAMPLE 4 | EXAMPLE 4 |
|---|---|

EP 4 043 524 B1

[FIG. 2]

25

[FIG. 3]

**EP 4 043 524 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20160144185 A
- JP 4285984 B
- JP 2015160900 A
- DE 4300798 A1